# EUROPEAN PATENT SPECIFICATION

(11) **EP 3 474 426 B1**
(45) Date of publication and mention of the grant of the patent: **09.02.2022**
(21) Application number: 17197581.6
(22) Date of filing: 20.10.2017
(51) Int. Cl.: H02K 11/33

(54) **INVERTER FOR AN ELECTRIC MACHINE COMPRISING A COOLING CHANNEL, ELECTRIC MACHINE FOR A VEHICLE AND VEHICLE**
WECHSELRICHTER FÜR EINE ELEKTRISCHE MASCHINE MIT EINEM KÜHLKANAL, ELEKTRISCHE MASCHINE FÜR EIN FAHRZEUG UND FAHRZEUG
ONDULEUR POUR MACHINE ÉLECTRIQUE COMPORTANT UN CANAL DE REFROIDISSEMENT, MACHINE ÉLECTRIQUE POUR UN VÉHICULE ET VÉHICULE

(43) Date of publication of application: 24.04.2019
(73) Proprietor: Valeo Siemens eAutomotive Germany GmbH, 91056 Erlangen (DE)
(72) Inventor: BOHLLÄNDER, Marco, 96114 Hirschaid (DE)
(74) Representative: Dr. Gassner & Partner mbB

(56) References cited:
- EP-A2- 1 971 195
- EP-A2- 2 149 973
- FR-A1- 3 047 870
- US-A1- 2002 011 327

## Description

The present invention relates to an inverter for an electric machine. Aside, the invention relates to an electric machine for a vehicle and a vehicle.

US 2002/011327 A1 discloses a power drive unit for a main motor of a vehicle. The power drive unit is provided with a semiconductor current conversion circuit such as an inverter and includes electronic devices. A heat sink is provided with a passage through which the coolant flows and removes heat from the electronic devices. The passage comprises turnings and a plurality of fin groups are placed in a portion of the passage below the power drive unit. The fin groups are successively dispose in parallel with the direction of the coolant flow. Adjoining fin groups are placed at a distance of an offset in the width direction of the passage.

EP 1 971 195 A2 discloses a power inverter comprising a power module providing three phases of a multiphase AC current. A cooling section for cooling heat generated form the power module is provided.

Inverters are widely used to convert a DC voltage into a multiphase AC current. With respect to automotive applications, inverters supplying the AC current to stator windings of an electric machine for driving the vehicle are of high interest. As inverters may conduct high currents, the cooling of semiconductor switching modules being switched to provide the multiphase AC current is a crucial issue.

It is known to provide a cooling channel conducting a coolant to the inverter, wherein the switching modules are thermally coupled to the cooling channel. Typically, the cooling channel is formed rectilinearly along a section, to which the switching modules are thermally coupled. In order to supply the coolant to the section, the cooling channel comprises a redirection structure arranged before a first switching module with respect to a flow direction of the current, typically.

Disadvantageously, such a configuration of the cooling channel has highly different thermal resistances between each switching module and the cooling channel. This results in an undesired non-uniform distribution of the heat dissipation among the switching modules.

Thus, it is an object of the invention to provide an improved inverter, particularly having a more uniform heat dissipation among its switching modules.

According to the invention, the above object is achieved by an inverter according to claim 1. Preferred embodiments are defined in the dependent claims.

The invention is based upon the consideration that a low thermal resistance between the first switching module and the cooling channel results from turbulences induced to the coolant by the redirection structure being arranged before the first switching module. Thus, it is suggested to provide the further redirection structure or further redirection structures between the or each pair of adjacent switching modules, in order generate turbulences in the region of the other switching modules as well, comparable to those turbulences leading to the low thermal resistance between the first switching module and the cooling channel.

Advantageously, the distribution of heat dissipation among the switching modules of the inverter according to the invention is rendered more uniform than a corresponding heat dissipation of a conventional inverter having a rectilinear cooling channel behind the first redirection structure.

The cooling channel may be connected or connectable to a pump and/or a heat exchanger being part of a closed cooling circuit for the heat dissipation. The pump and/or the heat exchanger may be integrated into the inverter or they may be separate units. The inverter may comprise a cooling block, particularly made of metal such as aluminum. At least a section of the cooling channel for the thermal coupling with the switching modules may be formed by the cooling block, e.g. drilled or milled into the cooling block. Alternatively, at least a section of the cooling channel for the thermal coupling with the switching modules may be a tube, e.g. made of copper.

Preferably, each redirection structure is configured to generate or to reinforce a turbulent flow. Thus, the redirection structure may convert a laminar flow of the coolant into the turbulent flow or increase turbulences of the turbulent flow, respectively. This configuration benefits from the ability of the turbulent flow to allow a higher heat dissipation than the laminar flow resulting in the improved thermal resistance. Typically, the redirection structure being disposed before the first switching module is configured to generate a turbulent flow and/or the further redirection structures are configured to reinforce the turbulent flow.

A redirection structure of the inverter according to the invention may configured to redirect the coolant by an angle of at least 135°, more preferably at least 175°. Additionally, the angle may be smaller than 200°, preferably smaller than 185°. Particularly, the redirection structure disposed before the first switching module is configured to redirect the coolant by a lower angle than the further redirection structures, which are preferably configured to redirect the coolant by an angle of at least 175°.

It is furthermore preferred that adjacent redirection structures are configured to redirect the coolant in opposite directions. The cooling channel may then have a meandering pattern.

With respect to the inverter according to the invention at least one redirection structure is comprised of a separator element reaching into a cavity inside an outer wall of the cooling channel. The separator element may be plate-shaped. The separator element may extend over at least 25 %, preferably over at least 33 %, more preferably over at least 50 %, and/or not more than 90 % of the cross-section of the cooling channel. Alternatively or additionally, the at least one redirection structure may be formed by the cooling channel being curved. Therein, the term "curved" refers to a preferably continuously bent shape as well as to a kinked or angled shape.

Particularly, in a stationary thermal state of the switching modules being cooled by the flowing coolant the highest thermal resistance among the switching modules does not differ more than 15 %, preferably 10 %, more preferably 5 % from the lowest thermal resistance among the switching modules. With respect to a conventional inverter having a merely rectilinear cooling channel behind a single redirection structure, it has been found out experimentally that the thermal resistance between a first switching module and the last switching module disposed to a cooling channel being rectilinearly may differ by up to 15 %, so that a corresponding improvement of the thermal resistance can be achieved by the inverter according to the invention. As the stationary thermal state an operating state of the inverter is considered, in which all thermal capacitances between the respective switching module and the cooling channel are substantially loaded, e.g. after three to five times of a main time constant have elapsed.

The inverter may comprise a carrier element for the switching modules or a carrier element for each switching module, wherein a switching module or the switching module is mounted on the carrier element having heat sink elements, particularly pin fins, reaching into the cooling channel perpendicularly with respect to the flow direction. The pin fins may be formed dome-like. In the case that all switching modules being mounted on one carrier element, it is preferred that a section of the carrier element arranged directly adjacent to a redirection structure, particularly a separator element, is free of heat sink elements.

Typically, each switching module comprises two transistor or thyristor structures being interconnected to a half bridge. Alternatively, each switching module may comprise a single transistor or a single thyristor structure. The transistor structure may be an insulated gate bipolar transistor (IGBT) structure, an insulated gate field-effect transistor structure, e.g. a metal oxide semiconductor field-effect transistor (MOSFET) structure. The thyristor structure may be a gate turn-off thyristor (GTO).

The inverter according to the invention may furthermore comprise a smoothing capacitor thermally coupled with the coolant for dissipating heat generated by the smoothing capacitor and arranged before or behind the switching modules with respect to the flow direction. Thus, a combined serial cooling strategy of the switching modules and the smoothing capacitor may be realized. Typically, a section of the cooling channel, with which the smoothing capacitor is coupled, is disposed outside the cooling block.

Aside, the invention relates to an electric machine for a vehicle, comprising stator windings and the inverter according to the invention configured to provide a multiphase AC current to the stator windings.

Furthermore, the invention relates to a vehicle, comprising the electric machine according to the invention configured to drive the vehicle.

All statements referring to the inventive inverter apply analogously to the inventive electric machine and the inventive vehicle, so that the above-mentioned advantages of the inventive inverter may be achieved as well.

Further details and advantages of the invention are disclosed in the following, wherein reference is made to the schematic drawings showing:
- Fig. 1: a partial top view of an embodiment of an inverter according to the invention;
- Fig. 2: a partial cross-section of the inverter along a dashed line II-II depicted in Fig. 1;
- Fig. 3: a block diagram of a coolant flow of the inverter; and
- Fig. 4: a schematic drawing of an embodiment of the vehicle according to the invention.

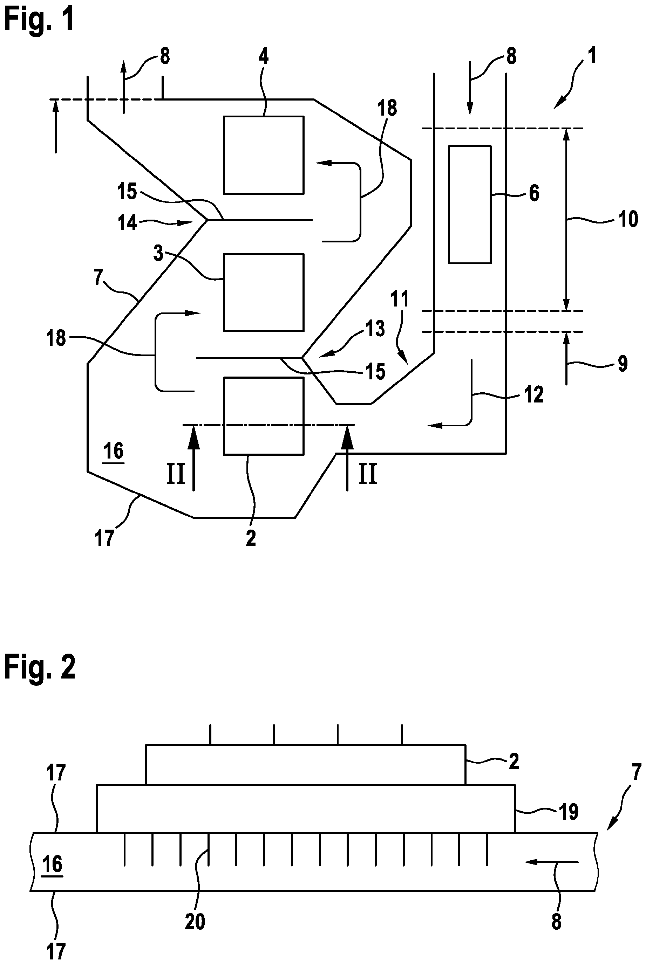

Fig. 1 is a partial top view of a first embodiment of an inverter 1, comprising three switching modules 2, 3, 4, a smoothing capacitor 6 and a cooling channel 7.

Each switching module 2, 3, 4 comprises two transistors structures, e.g. an insulated gate bipolar transistor (IGBT) structure or an insulated gate field-effect transistor structure, particularly a metal oxide semiconductor field-effect transistor (MOSFET) structure. The transistor structures are interconnected to half bridges. At central taps of the half bridges an AC output current is provided.

The cooling channel 7 is configured to conduct a coolant along a flow direction 8 and has a first section 9, in which the switching modules 2, 3, 4 are thermally coupled with the cooling channel 7 for dissipating heat generated by the switching modules 2, 3, 4. To a second section 10 of the cooling channel 7 the smoothing capacitor 6 is attached and thermally coupled with the cooling channel 7 for dissipating heat generated by the smoothing capacitor 6. The smoothing capacitor 6 is arranged before the switching modules 2, 3, 4 with respect to the flow direction 8 represented by an arrow.

Before the first switching module 2 with respect to the flow direction 8 a first redirection structure 11 is disposed. The first redirection structure 11 is formed by the cooling channel 7 being curved and configured to redirect the coolant by an angle of 90° represented by an arrow 12. Between each pair of adjacent switching modules 2, 3, 4 further redirection structures 13, 14 are disposed, wherein adjacent redirection structures 11, 13, 14 are configured to redirect the coolant in opposite directions forming a meandering pattern of the first section 9 of the cooling channel 7.

In detail, the second redirection structure 13 is disposed between the first switching module 2 and the second switching module 3 and the third redirection structure 14 is disposed between the second switching module 3 and the third switching module 4. The second redirection structure 13 and the third redirection structure 14 each are each formed by the cooling channel 7 being curved. Additionally, the second redirection structure 13 and the third redirection structure 14 each comprise a separator element 15 reaching into a cavity 16 inside an outer wall 17 of the cooling channel 7. Each separator element 15 is plate-shaped and extends over 50% of the cross-section of the cooling channel 7. By this, the second redirection structure 13 and the third redirection structure 14 are each configured to redirect the coolant by an angle of approximately 180° represented by arrows 18.

Fig. 2 is a partial cross-section of the inverter 1 along dashed a line II-II depicted in fig. 1. For each switching module 2, 3, 4 the inverter comprises a carrier element 19, on which a respective switching module 2, 3, 4 is mounted. The carrier element 19 comprises a plurality of heatsink elements 20 formed as dome-like pin fins. The heatsink elements 20 reach into the cooling channel 7 perpendicularly with respect to the flow direction 8 and improve the heat dissipation.

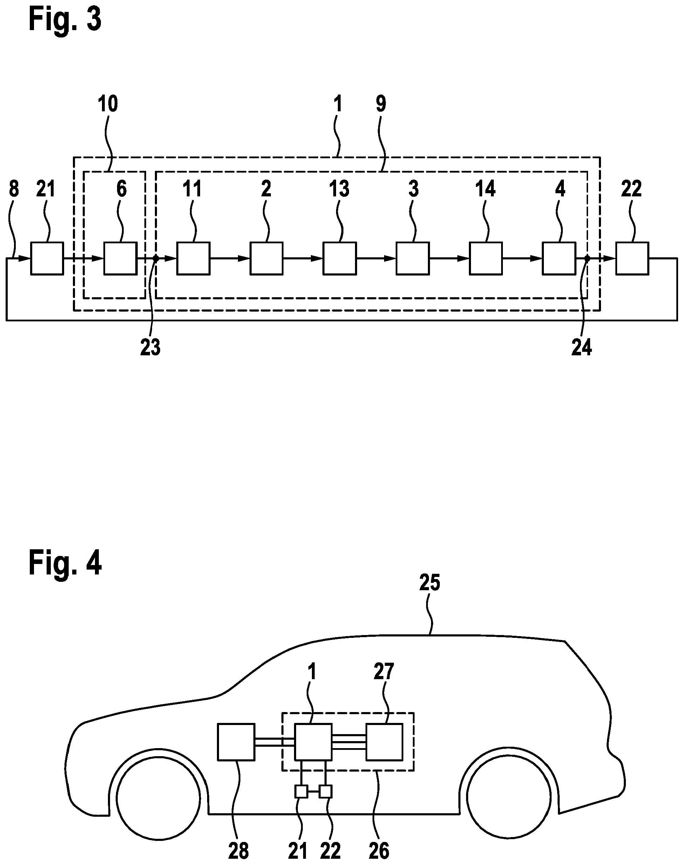

Fig. 3 is a block diagram of the coolant flow of the inverter 1. The inverter 1 is externally connected to a pump 21 configured to pump the coolant and to a heat exchanger 22 for dissipating heat to the exterior. By this, a closed cooling circuit is provided.

As can be seen the coolant flows serially through the smoothing capacitor 6 and via a forward inlet 23 of first section 9 along the first redirection structure 11, the first switching module 2, the second redirection structure 13, the second switching module 3, the third redirection structure 14 and the third switching module 4 to a return outlet 24 of the first section 9.

The first redirection structures 11 is configured to generate a turbulent flow of the coolant, i.e. to convert a laminar flow to a turbulent flow. This turbulent flow leads to a low thermal resistance between the first switching module 2 and the cooling channel 7. It has been found out that this turbulent flow decays after having passed the second switching module 3. Therefore, the second redirection structure 13 and the third redirection structure 14 are each configured to reinforce the turbulent flow in order to provide a similar low thermal resistance between the second switching module 3 or the third switching module 4, respectively, and the cooling channel 9. This means that in a stationary thermal state, in which thermal capacitances of the cooling channel 9 are substantially loaded, the highest thermal resistance among the switching modules 2, 3, 4 does not differ by more than 5% from the lowest thermal resistance among the switching modules 2, 3, 4.

According to another embodiment of an inverter corresponding to the one described above, all switching modules 2, 3, 4 are mounted on one carrier element 19, wherein sections of the carrier element 19 arranged directly above a separator element 15 are free of pin fins.

According to another embodiment of an inverter corresponding to one of the aforementioned embodiments, the pump 21 and the heat exchanger 22 are integral parts of the inverter 1.

According to another embodiment of an inverter 1 corresponding to one of the aforementioned embodiments, the smoothing capacitor 6 is arranged behind the switching modules 2, 3, 4 with respect to the flow direction.

According to another embodiment of an inverter 1 corresponding to one of the aforementioned embodiments, each switching module 2, 3, 4 comprises thyristor structures, such as gate turn-off (GTO) thyristor structures, instead of transistor structures.

According to another embodiment of an inverter corresponding to one of the aforementioned embodiments, each switching module comprises a single transistor or a single thyristor structure, wherein the switching modules are interconnected to half bridges. Thus, in the case of a three-phase output current of the inverter six redirection structures are provided.

Fig. 4 is a schematic drawing of an embodiment of a vehicle 25, comprising an electric machine 26 with an inverter 1 according to one of the above-mentioned embodiments and with stator windings 27 supplied by the AC output of the inverter 1. Furthermore, the vehicle 25 comprises a high voltage DC battery 28 configured to supply a DC voltage to the smoothing capacitor 6. The vehicle 25 furthermore comprises the pump 21 connected to the heat exchanger 22.

## Claims

1. Inverter (1) for an electric machine (26), comprising a plurality of switching modules (2, 3, 4) being part of a power unit of the inverter (1), wherein the power unit is configured to provide a multiphase AC output current and each switching module (2, 3, 4) is connected to an output phase of the inverter (1), wherein the inverter (1) further comprises a cooling channel configured to conduct a coolant and coupled thermally with the switching modules (2, 3, 4) for dissipating heat generated by the switching modules (2, 3, 4), wherein before a first switching module (2) with respect to a flow direction (8) of the coolant a redirection structure (11) is disposed, wherein between a pair of adjacent switching modules (2, 3, 4) with respect to the flow direction (8) a further redirection structure (13, 14) is disposed
**characterized in that**
the further redirection structure (13, 14) is configured to redirect the coolant by an angle of at least 95°.

2. Inverter according to claim 1, **characterized in that** each redirection structure (11, 13, 14) is configured to generate or to reinforce a turbulent flow by converting a laminar flow of the coolant into the turbulent flow or by increasing turbulences of the turbulent flow.

3. Inverter according to claim 1 or 2, **characterized in that** the further redirection (13, 14) structure is configured to redirect the coolant by an angle of at least 135°, preferably at least 175°.

4. Inverter according to any of the preceding claims, **characterized in that** adjacent redirection structures (11, 13, 14) are configured to redirect the coolant in opposite directions.

5. Inverter according to any of the preceding claims, **characterized in that** at least one redirection structure (11, 13, 14) is comprised of a separator element (15) reaching into a cavity (16) inside an outer wall (17) of the cooling channel (7) and/or formed by the cooling (7) channel being curved.

6. Inverter according to any of the preceding claims, **characterized in that** in a stationary thermal state of the switching modules (2, 3, 4) being cooled by the flowing coolant the highest thermal resistance among the switching modules (2, 3, 4) does not differ more than 15 %, preferably 10 %, more preferably 5 % from the lowest thermal resistance among the switching modules (2, 3, 4).

7. Inverter according to any of the preceding claims, **characterized in** it comprises a carrier element (19) for the switching modules (2, 3, 4) or a carrier element for each switching module (2, 3, 4), wherein a switching module (2, 3, 4) or the switching module (2, 3, 4) is mounted on the carrier element (19) having heat sink elements (20), particularly pin fins, reaching into the cooling channel (7) perpendicularly with respect to the flow direction (8).

8. Inverter according to any of the preceding claims, **characterized in that** each switching module (2, 3, 4) comprises a single transistor or thyristor structure or that each switching module (2, 3, 4) comprises two transistor or thyristor structures being interconnected to a half bridge.

9. Inverter according to any of the preceding claims, **characterized in that** it comprises a smoothing capacitor (6) thermally coupled with the coolant for dissipating heat generated by the smoothing capacitor (6) and arranged before or behind the switching modules (2, 3, 4) with respect to the flow direction (8).

10. Electric machine (26) for a vehicle (25), comprising stator windings (27) and an inverter (1) according to any of claims 1 to 9 configured to provide a multiphase AC current to the stator windings (27).

11. Vehicle (25), comprising an electric machine (26) according to claim 10 configured to drive the vehicle (25).

## Patentansprüche

1. Wechselrichter (1) für eine elektrische Maschine (26), mit einer Mehrzahl von Schaltmodulen (2, 3, 4), die Teil eines Leistungsteils des Wechselrichters (1) sind, wobei das Leistungsteil zum Bereitstellen eines mehrphasigen Ausgangswechselstroms ausgebildet ist und jedes Schaltmodul (2, 3, 4) mit einer Ausgangsphase des Wechselrichters (1) verbunden ist, wobei der Wechselrichter (1) ferner einen Kühlkanal aufweist, der zum Durchleiten eines Kühlmittels ausgebildet und thermisch mit den Schaltmodulen (2, 3, 4) gekoppelt ist, um von den Schaltmodulen (2, 3, 4) erzeugte Wärme abzuführen, wobei vor einem ersten Schaltmodul (2) in Bezug auf eine Strömungsrichtung (8) des Kühlmittels eine Umlenkstruktur (11) angeordnet ist, wobei zwischen einem Paar von in Bezug auf die Strömungsrichtung (8) benachbarten Schaltmodulen (2, 3, 4) eine weitere Umlenkstruktur (13, 14) angeordnet ist,
**dadurch gekennzeichnet, dass**
die weitere Umlenkstruktur (13, 14) so gestaltet ist, dass sie das Kühlmittel um einen Winkel von mindestens 95° umlenkt.

2. Wechselrichter nach Anspruch 1, **dadurch gekennzeichnet, dass** jede Umlenkstruktur (11, 13, 14) so konfiguriert ist, dass sie eine turbulente Strömung erzeugt oder verstärkt, indem sie eine laminare Strömung des Kühlmittels in eine turbulente Strömung umwandelt oder Turbulenzen der turbulenten Strömung erhöht.

3. Wechselrichter nach Anspruch 1 oder 2, **dadurch gekennzeichnet, dass** die weitere Umlenkstruktur (13, 14) so konfiguriert ist, dass sie das Kühlmittel um einen Winkel von mindestens 135°, vorzugsweise von mindestens 175°, umlenkt.

4. Wechselrichter nach einem der vorhergehenden Ansprüche, **dadurch gekennzeichnet, dass** benachbarte Umlenkstrukturen (11, 13, 14) so konfiguriert sind, dass sie das Kühlmittel in entgegengesetzte Richtungen umlenken.

5. Wechselrichter nach einem der vorhergehenden Ansprüche, **dadurch gekennzeichnet, dass** mindestens eine Umlenkstruktur (11, 13, 14) aus einem Trennelement (15) besteht, das in einen Hohlraum (16) innerhalb einer Außenwand (17) des Kühlkanals (7) hineinreicht und/oder dadurch gebildet ist, dass der Kühlkanal (7) gekrümmt ist.

6. Wechselrichter nach einem der vorhergehenden Ansprüche, **dadurch gekennzeichnet, dass** in einem stationären thermischen Zustand der durch das strömende Kühlmittel gekühlten Schaltmodule (2, 3, 4) der höchste thermische Widerstand der Schaltmodule (2, 3, 4) nicht mehr als 15 %, vorzugsweise 10 %, besonders bevorzugt 5 %, vom niedrigsten thermischen Widerstand der Schaltmodule (2, 3, 4) abweicht.

7. Wechselrichter nach einem der vorhergehenden Ansprüche, **dadurch gekennzeichnet, dass** er ein Trägerelement (19) für die Schaltmodule (2, 3, 4) oder ein Trägerelement für jedes Schaltmodul (2, 3, 4) aufweist, wobei ein Schaltmodul (2, 3, 4) oder das Schaltmodul (2, 3, 4) auf dem Trägerelement (19) mit senkrecht zur Strömungsrichtung (8) in den Kühlkanal (7) hineinragenden Kühlkörpern (20), insbesondere Stiftlamellen, montiert ist.

8. Wechselrichter nach einem der vorhergehenden Ansprüche, **dadurch gekennzeichnet, dass** jedes Schaltmodul (2, 3, 4) eine einzelne Transistor- oder Thyristorstruktur umfasst oder dass jedes Schaltmodul (2, 3, 4) zwei Transistor- oder Thyristorstrukturen umfasst, die zu einer Halbbrücke zusammengeschaltet sind.

9. Wechselrichter nach einem der vorhergehenden Ansprüche, **dadurch gekennzeichnet, dass** er einen mit dem Kühlmittel thermisch gekoppelten Glättungskondensator (6) zur Abführung der vom Glättungskondensator (6) erzeugten Wärme aufweist, der in Bezug auf die Strömungsrichtung (8) vor oder hinter den Schaltmodulen (2, 3, 4) angeordnet ist.

10. Elektrische Maschine (26) für ein Fahrzeug (25), umfassend Statorwicklungen (27) und einen Wechselrichter (1) nach einem der Ansprüche 1 bis 9, konfiguriert, um mehrphasigen Wechselstrom an die Statorwicklungen (27) zu liefern.

11. Fahrzeug (25), umfassend eine elektrische Maschine (26) nach Anspruch 10, die zum Antrieb des Fahrzeugs (25) konfiguriert ist.

## Revendications

1. Onduleur (1) pour une machine électrique (26), comprenant une pluralité de modules de commutation (2, 3, 4) faisant partie d'un bloc d'alimentation de l'onduleur (1), en ce que le bloc d'alimentation est configuré pour fournir un courant de sortie alternatif AC polyphasé et chaque module de commutation (2, 3, 4) est connecté à une phase de sortie de l'onduleur (1), en ce que l'onduleur (1) comprend en outre un canal de refroidissement configuré pour conduire un fluide de refroidissement et couplé thermiquement aux modules de commutation (2, 3, 4) pour dissiper de la chaleur générée par les modules de commutation (2, 3, 4), en ce qu'une structure de redirection (11) est disposée en amont d'un premier module de commutation (2) par rapport à un sens d'écoulement (8) du fluide de refroidissement, en ce qu'une autre structure de redirection (13, 14) est disposée entre une paire de modules de commutation (2, 3, 4) adjacents par rapport au sens d'écoulement (8)
**caractérisé en ce que**
l'autre structure de redirection (13, 14) est configurée pour rediriger le fluide de refroidissement à un angle d'au moins 95°.

2. Onduleur selon la revendication 1, **caractérisé en ce que** chaque structure de redirection (11, 13, 14) est configurée pour générer ou renforcer un écoulement turbulent en convertissant un écoulement laminaire du fluide de refroidissement en écoulement turbulent ou en augmentant des turbulences de l'écoulement turbulent.

3. Onduleur selon la revendication 1 ou 2, **caractérisé en ce que** l'autre structure de redirection (13, 14) est configurée pour rediriger le fluide de refroidissement à un angle d'au moins 135°, de préférence d'au moins 175°.

4. Onduleur selon l'une des revendications précédentes, **caractérisé en ce que** des structures de redirection (11, 13, 14) adjacentes sont configurées pour rediriger le fluide de refroidissement dans des directions opposées.

5. Onduleur selon l'une des revendications précédentes, **caractérisé en ce qu'**au moins une structure de redirection (11, 13, 14) est constituée d'un élément séparateur (15) atteignant une cavité (16) à l'intérieur d'une paroi extérieure (17) du canal de refroidissement (7) et/ou formée par le canal de refroidissement (7) qui est incurvé.

6. Onduleur selon l'une des revendications précédentes, **caractérisé en ce que** dans un état thermique stationnaire des modules de commutation (2, 3, 4) refroidis par le fluide de refroidissement circulant, la résistance thermique maximale parmi les modules de commutation (2, 3, 4) ne diffère pas plus de 15 %, de préférence de 10 %, en particulier de 5 % de la résistance thermique minimale parmi les modules de commutation (2, 3, 4).

7. Onduleur selon l'une des revendications précédentes, **caractérisé en ce qu'**il comprend un élément porteur (19) pour les modules de commutation (2, 3, 4) ou un élément porteur pour chaque module de commutation (2, 3, 4), **en ce qu'**un module de commutation (2, 3, 4) ou le module de commutation (2, 3, 4) est monté sur l'élément porteur (19) ayant des éléments de dissipateur thermique (20), en particulier des ailettes en forme de broche, atteignant le canal de refroidissement (7) perpendiculairement par rapport au sens d'écoulement (8).

8. Onduleur selon l'une des revendications précédentes, **caractérisé en ce que** chaque module de commutation (2, 3, 4) comprend une structure transistor simple ou thyristor ou **en ce que** chaque module de commutation (2, 3, 4) comprend deux structures transistor ou thyristor interconnectées à un demi-pont.

9. Onduleur selon l'une des revendications précédentes, **caractérisé en ce qu'**il comprend un condensateur de lissage (6) couplé thermiquement au fluide de refroidissement pour dissiper de la chaleur générée par le condensateur de lissage (6) et disposé en amont ou en aval des modules de commutation (2, 3, 4) par rapport au sens d'écoulement (8).

10. Machine électrique (26) pour un véhicule (25), comprenant des enroulements statoriques (27) et un onduleur (1) selon l'une des revendications 1 à 9 configurée pour fournir un courant alternatif CA polyphasé aux enroulements statoriques (27).

11. Véhicule (25), comprenant une machine électrique (26) selon la revendication 10 configurée pour entraîner le véhicule (25).
